# EUROPEAN PATENT SPECIFICATION

(11) **EP 3 813 079 B1**
(45) Date of publication and mention of the grant of the patent: **14.09.2022**
(21) Application number: 19888645.9
(22) Date of filing: 31.10.2019
(51) Int. Cl.: C23C 4/129, C23C 4/04, C23C 4/10, C23C 28/00, G21F 5/06, G21F 5/008

(54) **DISPOSAL CONTAINER FOR SPENT NUCLEAR FUEL**
ENTSORGUNGSBEHÄLTER FÜR VERBRAUCHTEN KERNBRENNSTOFF
CONTENEUR D'ÉLIMINATION DE COMBUSTIBLE NUCLÉAIRE IRRADIÉ

(30) Priority: 29.11.2018 KR 20180150901
(43) Date of publication of application: 28.04.2021
(73) Proprietor: Korea Radioactive Waste Agency, Gyeongju-si, Gyeongsangbuk-do 38062 (KR); Daeu Industry Co., Ltd., Gyeongju-si, Gyeongsangbuk-do 38041 (KR); Hydro-Electronic Application Development Mfg. Co., Ltd., Siheung-si, Gyeonggi-do 15079 (KR)
(72) Inventor: SEONG, Ki-Yeoul, Daegu 42778 (KR); YOO, Ou-Jeong, Gyeongju-si Gyeongsangbuk-do 38048 (KR); DO, Il-Woo, Daegu 41265 (KR)
(74) Representative: BCKIP
(86) International application number: PCT/KR2019/014558
(87) International publication number: WO 2020/111536

(56) References cited:
- JP-A- H0 720 282
- JP-A- 2013 170 888
- JP-A- 2016 180 593
- KR-A- 20100 097 821
- US-A1- 2007 107 810
- US-A1- 2007 153 965
- US-A1- 2011 077 449
- US-B1- 6 544 606

## Description

### BACKGROUND OF THE INVENTION

### 1. Field

The present invention relates to a disposal canister of spent nuclear fuel and, more particularly, is directed a disposal canister of spent nuclear fuel having excellent corrosion resistance and durability.

### 2. Description of the Related Art

In connection with the spent nuclear fuel used in a nuclear power plant, after heat and radioactivity decrease during a certain period of time for cooling, the spent nuclear fuel is loaded into the disposal container and is disposed of at a disposal facility located at a depth of 500 meters or more. Since the disposal system must be designed to isolate spent nuclear fuel from the human life environment for more than thousands of years, the most important function of the disposal container is to prevent leakage from spent nuclear fuel for thousands of years. To this end, a disposal container should have excellent resistance to materials that can cause corrosion of a disposal container, such as groundwater, and durability enough to withstand external stress for long periods of time.

The most commonly used one of conventional disposal containers are a carbon steel disposal container, and a copper-cast iron disposal container, of which an internal material is made of cast iron, and an external material is made of copper. While the carbon-cast disposal container is mainly used in countries that dispose of the vitrified high level waste generated by reprocessing of spent nuclear fuel, and copper-cast iron disposal container is mainly used in countries that adopt direct disposal of spent nuclear fuel without reprocessing. However, although a disposal container made of carbon steel has an advantage such as low manufacturing costs, it also has disadvantage that they are vulnerable to corrosion by underground water. When it comes to copper-cast iron canister, copper, which is outer part, can be resistant to corrosion caused by groundwater. On the other hand, the drawbacks of copper-cast-iron canister are overall vulnerability to corrosion and expensive manufacturing cost due to the high price of copper.

Many studies are being conducted to solve the problems of the conventional disposal canisters. The Patent Publication No. 2003-0079970 of Korea relates to "a device for storing the heat generating material and a vessel for such device". The above disclosed invention is to store heat generating material with toxicity, in particular, nuclear fuel from the nuclear reactors. That is, a device for storing the heat generating material and a vessel for such device, which is characterized in that it includes a cylindrical reinforced concrete body with cylindrical penetration central passage; and a plurality of axially long and cylindrical storage spaces, which accommodate toxic material and are formed by storage containers, in parallel with and radially arranged apart from each other around the central passage, and the above storage containers made of thermally conductive material contain fluid coolant are loaded into the concrete body, and are equipped with internal compartments accommodating toxic material, and external compartments surrounding the above internal compartments, and a closed circulation channels for fluid coolant is formed by both of the containers and these compartments. However, as the device for storing the heat generating material and a vessel for such device according to the Korean Patent Publication No. 2003-0079970 is composed of a fluid-sealing device, a cylindrical inner wall, and a fluid communication part, there was a problem that the structure thereof is complex, the manufacturing cost is high, and the weight and volume were very large.

The registered U.S. Patent No 6,166,391 relates to "Uranium oxide shipping container". That is, the above patent disclosed a container, which includes an external container; and a plurality of internal containers, the plurality of the above internal containers are arranged separately apart from external container in the inner side, and in which the above external container and the internal containers are made of stainless steel, and the sides of the internal containers are filled with nuclear neutralizers consisting of plastic. The container according to the U.S. Patent No. 6,166,391 has a problem in that the volume and weight are large and the manufacturing cost is high because the outer container has a structure including a plurality of inner containers.

In addition, Japan's Publication Patent No. P2017-525903A is related to "a vapor cooled shielding liner for cryogenic storage in composite pressure vessels". It discloses a container which is characterized in that it can consist of a storage container capable of accommodating cryogenic fluid, and a vapor-cooling cryogenic pressure vessel comprising one or more passages composed of one or more paths surrounding the storage container, wherein the pressure vessel is a composite material selected from polymer/ceramic, polymer/metal, and metal/ceramic. However, the container according to the above Publication Patent No. P2017-525903A had a problem that it is not suitable for use as a disposal container for spent nuclear fuel, and durability is not very long due to weak bonding strength of different materials when considering long term disposal of spent nuclear fuel.

Patent Application No. US 2007/107810 A1 discloses a system for coating a surface comprising providing a source of amorphous metal that contains more than eleven elements and applying the amorphous metal that contains more than eleven elements to the surface by a highvelocity oxy-fuel (HVOF) spray processing. The amorphous metal that contains more than eleven elements comprises iron or nickel based amorphous metal with up to twenty alloying elements selected from the group comprising Fe, Co, Ni, Mn, B, C, Cr, Mo, W, Si, Ta, Nb, Al, Zr, Ti, La, Gd, Y, O and N.

### SUMMARY OF THE INVENTION

An object to be achieved by the present invention is to provide a disposal container of spent fuel, which has excellent corrosion resistance and durability, excellent adhesion among the different kinds of materials such as a metal, a ceramic and a polymer, and may increase ease of handling and operation.

A disposal canister of spent nuclear fuel according to an embodiment of the present invention comprises: a metal container 11 capable of charging the spent nuclear fuel; a ceramic member 20 formed on the outer surface of the metal container 11; and a polymer member 30 formed on the outer surface of the ceramic member 20. The ceramic member 20 is characterized in that the ceramic powder in which boron-containing ceramic powder and ferroalloy ceramic powder are mixed is coated on the outer circumferential surface of the metal container 11 by using High Velocity Oxy-fuel spray. Furthermore, the present invention is characterized in that the metal of the metal container 11 is cast iron or steel, and the boron-containing ceramic powder of the ceramic member 20 is one or more mixtures selected from the group consisting of SiB₄, AlB₂, TiB₂ ZrB and B₄C, and the ferroalloy ceramic is FeCr₂O₄. The mixed ceramic powder is characterized in that it consists of 10 to 20% by weight of boron-containing ceramic powder and 80 to 90% by weight of ferroalloy ceramic powder.

Here, the metal container 11 may be characterized in that it comprises a lid portion 12 formed on a top side and coupled by welding.

The ceramic member 20 may be characterized in that the outer circumferential surface thereof is formed on the outer surface of the sandblasted metal container 11.

The polymer member 30 may be characterized in that it is a mixture of one or more members selected from the group consisting of polycarbonate, polypropylene, and polystyrene.

The present invention has an effect that there is provided a disposal container of spent fuel, which has excellent corrosion resistance and durability, excellent adhesion among the different kinds of materials such as a metal, a ceramic and a polymer, and may increase ease of handling and operation.

### BRIEF DESCRIPTION OF THE DRAWINGS

FIG. 1 is a schematic diagram showing a configuration of a metal canister including a lid 12 according to an embodiment of the present invention.
FIG. 2 is an enlarged diagram schematically showing the appearance of a metal container, a ceramic member and a polymer member configuring a disposal container for spent nuclear fuel according to an embodiment of the present invention.

### DETAILED DESCRIPTION OF THE INVENTION

The embodiments of the present invention are provided to more fully describe the present invention to those having a common knowledge in the related art, and the following embodiments may be modified into various other forms, and the scope of the present invention is not limited to the following embodiments. Rather, these embodiments are provided to explain the present invention more clearly and completely, and to fully convey the spirit of the present invention to those skilled in the art.

In addition, in the following drawings, a thickness or a size of each layer is exaggerated for convenience and clarity of description, and the same reference numerals in the drawings refer to the same elements. As used herein, the term, "and/or" includes any one and all combinations of one or more of the listed items.

The terminology used herein is used to describe a specific embodiment and is not intended to limit the present invention. As used herein, a singular form may include plural forms unless the context clearly indicates otherwise. Also, as used herein, the term such as "comprise" and/or "comprising" specifies the mentioned shapes, numbers, steps, actions, members, elements and/or the presence of these groups, and does not exclude the presence or addition of one or more other shapes, numbers, actions, members, elements and/or presence or addition of groups.

Hereinafter, the preferred embodiments of the present invention will be described in detail with reference to the accompanying drawings.

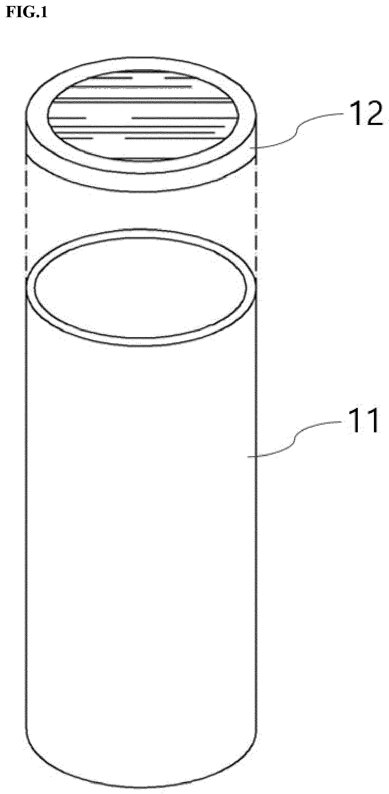

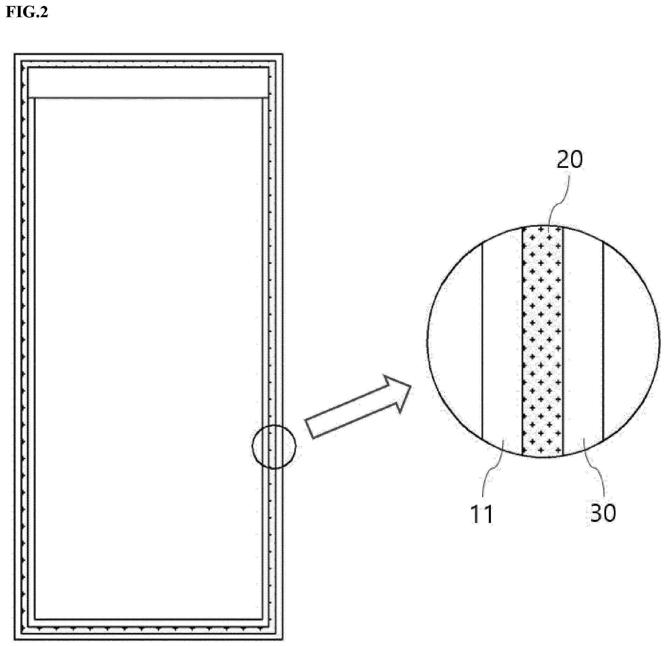

FIG. 1 is a schematic diagram showing a configuration of a metal canister including a lid 12 according to an embodiment of the present invention, and FIG. 2 is an enlarged diagram schematically showing the appearance of a metal container, a ceramic member and a polymer member configuring a disposal container for spent nuclear fuel according to an embodiment of the present invention.

As illustrated in FIG. 1 and FIG. 2, a container for disposal of spent nuclear fuel according to an embodiment of the present invention includes: a metal container 11 capable of loading spent nuclear fuel; a metal container 11 capable of loading spent nuclear fuel; a ceramic member 20 formed on the outer surface of the metal container 11;and a polymer member 30 formed on the outer surface of the ceramic member 20.

The metal container 11 has a structure capable of carrying spent nuclear fuel, which is highlevel radioactive waste discharged after being used as fuel in a nuclear reactor. It has a function for structurally protecting the spent nuclear fuel loaded into the inner side. Therefore, the metal container 11 may be made of cast iron, steel, or nickel alloy steel because it is desirable to have a physically sealed structure with excellent stiffness of the material. In consideration of manufacturing cost and strength, it is preferable to use cast iron or steel. In addition, since the metal container 11 must maintain a stable sealed structure, the metal container 11 includes a lid part 12 formed on the top, and it is preferable that the lid part 12 is manufactured to be joined by welding.

The ceramic member 20 are formed on the outer surface of the metal container 11, mainly to prevent the metal container 11 from being corroded by groundwater and to block the release of neutrons from the internal spent nuclear fuel to the outside. Therefore, it is desirable that ceramic member 20 include boron which has an excellent effect of absorbing neutrons emitted from spent fuel.

The ceramic member 20 of this invention consists of a mixture of boron-containing ceramic powder and ferroalloy ceramic powder. The boron-containing ceramic powder above not only protects corrosion from the outside of the metal container 11 but may also effectively absorb neutrons emitted from the internal spent fuel. In addition, the above-mentioned ferroalloy ceramic powder may solve the problem that the mutual binding force is weakened when heterocoupling the ceramic-metal with the metal container 11.

Specifically, the ceramic member 20 according to the present invention, the mixed ceramic powder in which boron-containing ceramic powder and ferroalloy ceramic powder are mixed is coated on the outer face of the metal container 11 by using a High Velocity Oxy-fuel spray. High Velocity Oxy-fuel spray is a method wherein the powder of ceramics are melt at high-speed by using oxygen acetylene salt of about 2,400°C to cover the ceramics on the metal surface, and since the ceramic members 20 of this invention contain ferroalloy ceramic powder, there is a merit that the combined strength of the metal container 11 and ceramic member 20 is very superior when the ceramic members 20 are formed on the surface of the metal containers 11.

The above boron-containing ceramic powder use one or more mixtures selected from the group composed of SiB₄, AlB₂, TiB₂ ZrB and B₄C having excellent neutron absorption function, and it employs ferroalloy ceramic powder FeCr₂O₄ with excellent laminated efficiency and coating strength after a coating process using a High Velocity Oxy-fuel spray.

The mixed ceramic powder of this invention which consists of 10 to 20 weight percent of boron-containing ceramic powder and 80 to 90 weight percent of ferroalloy ceramic powder. If the boron-containing ceramic powder is added less than 10 percent by weight, the ability of the mixed ceramic powder to absorb neutrons emitted from spent fuel will be deteriorated, and if the ferroalloy ceramic powder is added less than 80 percent by weight, there is a case that a coating layer of ceramic members 20 on the surface of metal container is normally not formed after a coating process using High Velocity Oxy-fuel spray, which may reduce the durability of spent fuel disposal container.

The ceramic member 20 of this invention has the advantage that there is an excellent binding force between the metal container 11 and the ceramic member 20 even if being formed on the surface of a common metal container 11, but it is also possible to coat the ceramic member 20 on an outer surface of a metal container 11 processed via a sandblasting method, so that the coupling between the metal container 11 and the ceramic member 20 may be improved remarkably.

A polymer member 30 is formed on the outer surface of ceramic members 20, and have a function to prevent pores that may occur on the outer surface of ceramic members (20) formed on the surface of metal containers 11 from coming into contact with the outside, and has excellent internal radiation properties. In other words, as the polymer member 30 is coated on the outer surface of ceramic member 20, a problem that may occur during a coating process of the ceramic member 20 may be eliminated. As a result, an internal corrosion resistance of container for disposal of spent fuel may be improved tremendously.

It is preferable that the above polymer member 30 consist of one or more mixtures selected from a group of polycarbonate, polypropylene and polystyrene with excellent shock resistance and weather resistance properties.

The disposal container of spent fuel according to the present invention have an advantage that the canister may be treated safely and working conditions are increased remarkably because of their excellent corrosion resistance and durability, low manufacturing costs and relatively light weight.

## Claims

1. A disposal canister of spent nuclear fuel comprising:
a metal container (11) capable of charging the spent nuclear fuel;
a ceramic member (20) formed on the outer surface of the metal container (11); and
a polymer member (30) formed on the outer surface of the ceramic member (20), wherein the ceramic member (20) is **characterized in that** a mixed ceramic powder in which boron-containing ceramic powder and ferroalloy ceramic powder are mixed is coated on the outer circumferential surface of the metal container (11) by using High Velocity Oxy-fuel spray, wherein that the metal of the metal container (11) is cast iron or steel, the boron-containing ceramic powder of the ceramic member (20) is one or more mixtures selected from the group consisting of SiB₄, AlB₂, TiB₂ ZrB and B₄C, and the ferroalloy ceramic is FeCr₂O₄ and wherein the mixed ceramic powder is **characterized in that** it consists of 10 to 20% by weight of boron-containing ceramic powder and 80 to 90% by weight of ferroalloy ceramic powder.

2. The disposal canister of spent nuclear fuel of the claim 1, wherein the metal container (11) is **characterized in that** it comprises a lid portion (12) formed on a top side and coupled by welding.

3. The disposal canister of spent nuclear fuel of the claim 1, wherein the ceramic member (20) is **characterized in that** the inner circumferential surface thereof is formed on the outer surface of the sandblasted metal container (11).

4. The disposal canister of spent nuclear fuel of the claim 1, wherein the polymer member (30) is **characterized in that** it is a mixture of one or more members selected from the group consisting of polycarbonate, polypropylene, and polystyrene.

## Patentansprüche

1. Entsorgungskanister für abgebrannten Kernbrennstoff, umfassend:
einen Metallbehälter (11), der in der Lage ist, den abgebrannten Kernbrennstoff aufzunehmen;
ein Keramikelement (20), das auf der Außenfläche des Metallbehälters (11) ausgebildet ist; und
ein Polymerelement (30), das auf der Außenfläche des Keramikelements (20) ausgebildet ist,
wobei das Keramikelement (20) **dadurch gekennzeichnet ist, dass** ein gemischtes Keramikpulver, in dem borhaltiges Keramikpulver und Ferrolegierungs-Keramikpulver gemischt sind, auf die Außenumfangsfläche des Metallbehälters (11) unter Verwendung von Hochgeschwindigkeitsflammspritzen beschichtet ist,
wobei das Metall des Metallbehälters (11) Gusseisen oder Stahl ist, das borhaltige Keramikpulver des Keramikelements (20) eine Mischung aus einer oder mehreren aus der Gruppe umfassend SiB₄, AlB₂, TiB₂, ZrB und B₄C ausgewählten Substanzen ist, und die Ferrolegierungs-Keramik FeCr₂O₄ ist, und
wobei das gemischte Keramikpulver **dadurch gekennzeichnet ist, dass** es aus 10 bis 20 Gew.-% borhaltigem Keramikpulver und 80 bis 90 Gew.-% Ferrolegierungs-Keramikpulver besteht.

2. Entsorgungskanister für abgebrannten Kernbrennstoff nach Anspruch 1, wobei der Metallbehälter (11) **dadurch gekennzeichnet ist, dass** er einen Deckelabschnitt (12) umfasst, der auf einer Oberseite ausgebildet und durch Schweißen gekoppelt ist.

3. Entsorgungskanister für abgebrannten Kernbrennstoff nach Anspruch 1, wobei das Keramikelement (20) **dadurch gekennzeichnet ist, dass** seine Innenumfangsfläche auf der Außenfläche des sandgestrahlten Metallbehälters (11) ausgebildet ist.

4. Entsorgungskanister für abgebrannten Kernbrennstoff nach Anspruch 1, wobei das Polymerelement (30) **dadurch gekennzeichnet ist, dass** es eine Mischung aus einer oder mehreren aus der Gruppe umfassend Polycarbonat, Polypropylen und Polystyrol ausgewählten Substanzen ist.

## Revendications

1. Conteneur d'élimination de combustible nucléaire irradié, comprenant :
un récipient métallique (11) apte à recevoir le combustible nucléaire irradié ;
un élément céramique (20) formé sur la surface extérieure du récipient métallique (11) ; et
un élément polymère (30) formé sur la surface extérieure de l'élément céramique (20), où l'élément céramique (20) est **caractérisé en ce qu'**une poudre céramique mélangée, où une poudre céramique à teneur en bore est mélangée à une poudre céramique à alliage ferreux, est appliquée sur la surface circonférentielle extérieure du récipient métallique (11) par pulvérisation d'oxygène-combustible à haute vitesse, **en ce que** le métal du récipient métallique (11) est de la fonte ou de l'acier, la poudre céramique à teneur en bore de l'élément céramique (20) est un ou plusieurs mélanges sélectionnés dans le groupe consistant en SiB₄, AlB₂, TiB₂ ZrB et B₄C, et la céramique à alliage ferreux est FeCr₂O₄, et où la poudre céramique mélangée est **caractérisée en ce qu'**elle consiste en une poudre céramique à teneur en bore, comprise entre 10 et 20 % en poids, et en une poudre céramique à alliage ferreux, comprise entre 80 et 90 % en poids.

2. Conteneur d'élimination de combustible nucléaire irradié selon la revendication 1, où le récipient métallique (11) est **caractérisé en ce qu'**il comprend une partie de couvercle (12) formée au sommet et raccordée par soudage.

3. Conteneur d'élimination de combustible nucléaire irradié selon la revendication 1, où l'élément céramique (20) est **caractérisé en ce que** sa surface circonférentielle intérieure est formée sur la surface extérieure du récipient métallique microbillé (11).

4. Conteneur d'élimination de combustible nucléaire irradié selon la revendication 1, où l'élément polymère (30) est **caractérisé en ce qu'**il est un mélange d'un ou de plusieurs éléments sélectionnés dans le groupe consistant en polycarbonate, polypropylène et polystyrène.
